# EUROPÄISCHE PATENTSCHRIFT

(11) **EP 2 310 222 B1**
(45) Veröffentlichungstag und Bekanntmachung des Hinweises auf die Patenterteilung: **07.03.2012**
(21) Anmeldenummer: 09775539.1
(22) Anmeldetag: 29.05.2009
(51) Int. Cl.: B60K 15/03

(54) **TANK FÜR BETRIEBSMITTEL VON KRAFTFAHRZEUGEN**
TANK FOR WORKING FLUIDS OF MOTOR VEHICLES
RÉSERVOIR À CARBURANT DE VÉHICULES AUTOMOBILES

(30) Priorität: 06.08.2008 AT 4222008 U
(43) Veröffentlichungstag der Anmeldung: 20.04.2011
(73) Patentinhaber: Alutech Gesellschaft m.b.H., 5651 Lend (AT)
(72) Erfinder: MAGNUSSON, Martin, S-302 59 Halmstad (SE); FLETCHER, Paul, A-5620 Schwarzach (AT); FELDNER, Otto, A-5760 Saalfelden (AT)
(74) Vertreter: Weiser, Andreas
(86) Internationale Anmeldenummer: PCT/AT2009/000223
(87) Internationale Veröffentlichungsnummer: WO 2010/015006

(56) Entgegenhaltungen:
- EP-A- 0 930 190
- EP-A- 1 591 370
- DE-A1-102006 054 208
- FR-A- 2 109 489

## Beschreibung

Die vorliegende Erfindung betrifft einen Tank für Betriebsmittel von Kraftfahrzeugen, mit einer Metallwandung, zumindest einer Öffnung darin, sowie einer Kunststoffbeschichtung auf der Innenseite der Metallwandung.

Innenseitig kunststoffbeschichtete Metalltanks werden insbesondere für aggressive Betriebsmittel von Kraftfahrzeugen benötigt, beispielsweise Harnstofflösungen wie AdBlue^{®}, die als Katalysatorflüssigkeiten zur Abgasreinigung von Dieselmotoren Verwendung finden. Die Kunststoffbeschichtung wird in der Regel durch Rotolining im Inneren ("in situ") des Tanks gebildet. Dazu wird Kunststoffgranulat über die Öffnung in den Tank eingebracht, die Öffnung verschlossen und der Tank unter Erhitzung gedreht, bis der Kunststoff auf der Innenseite der Metallwandung gleichmäßig aufschmilzt und dort eine Kunststoffbeschichtung bildet. Die Öffnung wird anschließend wieder freigelegt.

Dabei ergibt sich das Problem, daß nach dem herkömmlichen Stand der Technik im Bereich der Kanten der Öffnung Teile der Metallwandung freiliegen und damit dem aggressiven Tankinhalt ausgesetzt sein können, insbesondere beim Befüllen des Tanks oder auch bei heftigen Erschütterungen im Betrieb. Auch kann es passieren, daß Betriebsmittel ausgehend von der Öffnung in den Bereich zwischen Metallwandung und Kunststoffbeschichtung eindringen und diese unterwandern und ihre aggressive Wirkung großflächig auf das gesamte Metallmaterial des Tanks entfalten. Aus der EP 0 930 190 A1 ist es an sich bekannt, einen Kunststofftank mit einer Kunststoff-Gassperrfolie auszukleiden und diese U-förmig um einen Innenabsatz eines nach außen vorstehend ausgeformten Öffnungsstutzens herumzuführen. Ein in die Öffnung eingesetzter Bauteil übergreift mit einen Endflansch den Öffnungsstutzen und liegt auf dessen Stirnrand und dem Stirnrand der Gassperrfolie auf. An dieser Stelle kann Betriebsmittel die Gassperrfolie unterwandern, was die Gefahr einer Schädigung des Tankmaterials in sich birgt. Die Erfindung setzt sich zum Ziel, die Nachteile des Standes der Technik zu überwinden und einen kunststoffbeschichteten Metalltank zu schaffen, bei welchem ein Kontakt des Tankinhalts mit der Metallwandung des Tanks in allen Betriebsphasen weitgehend ausgeschlossen ist. Dieses Ziel wird mit einem Tank der einleitend genannten Art erreicht, der sich gemäß einen ersten Ausführungsform der Erfindung dadurch auszeichnet, daß sich die Kunststoffbeschichtung durch die Öffnung hindurch zumindest bis zum Niveau der Außenseite der Metallwandung erstreckt, in dem sie U-förmig um die Kante des Rands der Öffnung nach außen geführt ist und auf dem um die Öffnung liegenden Bereich der Außenseite der Metallwandung aufliegt, wobei der Tank einen in den Tank reichenden und mit einem Endflansch versehenen Bauteil, bevorzugt einen Meßwertgeber, aufweist, der in der Öffnung aufgenommen ist und dessen Endflansch die Kunststoffbeschichtung auf dem genannten Bereich der Außenseite in dichter Anlage übergreift.

Auf diese Weise wird wirksam verhindert, daß aggressive Betriebsmittel die Kunststoffbeschichtung im Öffnungsbereich unterwandern und damit die Metallstruktur des Tanks gefährden können. Gleichzeitig werden auch die Randbereiche und Kanten der Öffnung geschützt, sodaß sowohl beim Befüllen als auch im Betrieb ein Kontakt der Betriebsmittel mit der Metallstruktur unterbunden wird. Nach entsprechendem Verschließen der Öffnung ergibt sich somit eine vollständig geschlossene "Kunststoffblase" für den aggressiven Tankinhalt.

Dadurch kann einerseits ein Schutz der Kunststoffbeschichtung gegenüber äußeren Einflüssen erzielt werden, und anderseits bildet die Kunststoffbeschichtung zusammen mit dem Endflansch eine ausgezeichnete Abdichtung.

Die Abdichtung kann noch weiter verbessert werden, wenn gemäß einem weiteren Merkmal der Erfindung der Endflansch eine Dichtung zur Anlage an der Kunststoffbeschichtung im genannten Bereich aufweist.

In einer zweiten Ausführungsform der Erfindung erstreckt sich die Kunststoffbeschichtung über das Niveau der Außenseite hinaus und die Öffnung nimmt eine über die Außenseite der Metallwandung vorstehende Hülse auf, an deren Innenseite die Kunststoffbeschichtung anliegt. Auch mit dieser Variante der Erfindung können sowohl die Unterwanderung der Kunststoffbeschichtung im Öffnungsbereich durch den aggressiven Tankinhalt als auch die Gefahr einer Benetzung der Metallstruktur beim Befüllen oder im Betrieb unterbunden werden.

Besonders günstig ist es, wenn die genannte Hülse einen Einfüllstutzen aufnimmt, welcher in die Kunststoffbeschichtung auf der Innenseite der Hülse eingepreßt ist, wodurch eine zusätzliche Abdichtung erzielt werden kann.

Zusätzlich kann der Einfüllstutzen mit einem Außengewinde und/oder mit Außenrippen zur Preßverankerung in der Kunststoffbeschichtung versehen werden, wodurch die Dichtwirkung noch weiter verbessert werden kann.

Besonders vorteilhaft ist es, wenn der Einfüllstutzen an seinem äußeren Ende einen umgebogenen Rand besitzt, welcher das äußere Ende der Hülse mit ihrer Kunststoffbeschichtung umgreift. Dadurch wird die Kunststoffbeschichtung vollständig vor äußeren Einflüssen geschützt und die Gefahr eines Unterwanderns der Kunststoffbeschichtung auch in diesem Bereich unterbunden.

Eine weitere bevorzugte Variante der Erfindung zeichnet sich dadurch aus, daß die Hülse und der Einfüllstutzen zueinander komplementäre Innenabsätze aufweisen und der Innenabsatz des Einfüllstutzens mittels die Kunststoffbeschichtung durchsetzender Befestigungsmittel am Innenabsatz der Hülse festgelegt ist. Dadurch werden ein zusätzlicher Dichtfalz und ein axiales Verpressen zwischen Einfüllstutzen und Hülse erreicht.

Der erfindungsgemäße Tank kann aus beliebigem Metall gefertigt werden, beispielsweise Stahlblech. Die hier vorgestellten Konstruktionen eignen sich jedoch besonders zum Schutz von Tanks aus Aluminium, und eine bevorzugte Ausgestaltung der Erfindung besteht demgemäß darin, daß die Metallwandung und die optionale Hülse aus Aluminium gefertigt sind.

Auch die Kunststoffbeschichtung kann auf jede in der Technik bekannte Weise gebildet werden. Besonders vorteilhaft ist es, wenn die Kunststoffbeschichtung durch Rotolining in-situ in der Metallwandung geformt ist.

Der Tank der Erfindung eignet sich auch zur Aufnahme beliebiger Betriebsmittel von Kraftfahrzeugen, beispielsweise von Kraftstoffen auf Erdtilbasis, Biokraftstoffen, Ethanol, Hydraulik- oder Schmierölen usw. Besonders geeignet ist die vorgestellte Konstruktion für Tanks zur Aufnahme von Katalysator-Harnstofflösungen, und demgemäß zeichnet sich eine besonders bevorzugte Ausführungsform der Erfindung dadurch aus, daß die Kunststoffbeschichtung resistent gegenüber Harnstofflösungen ist.

Die Erfindung wird nachstehend anhand von in den beigeschlossenen Zeichnungen dargestellten Ausführungsbeispielen näher erläutert. In den Zeichnungen zeigt:
Fig. 1 den Tank der Erfindung überblickshaft im Schnitt;
Fig. 2 den Öffnungsbereich einer ersten Ausführungsform der Erfindung zur Aufnahme eines Meßwertgebers (linke Hälfte von Fig. 2) und eine bei der Fertigung dieses Öffnungsbereichs verwendete Formglocke (rechte Hälfte von Fig. 2) jeweils im Schnitt;
Fig. 3 den Öffnungsbereich einer zweiten Ausführungsform der Erfindung zur Aufnahme eines Einfüllstutzens im Schnitt; und
Fig. 4 den Einfüllstutzen der Ausführungsform von Fig. 4 in der Draufsicht.

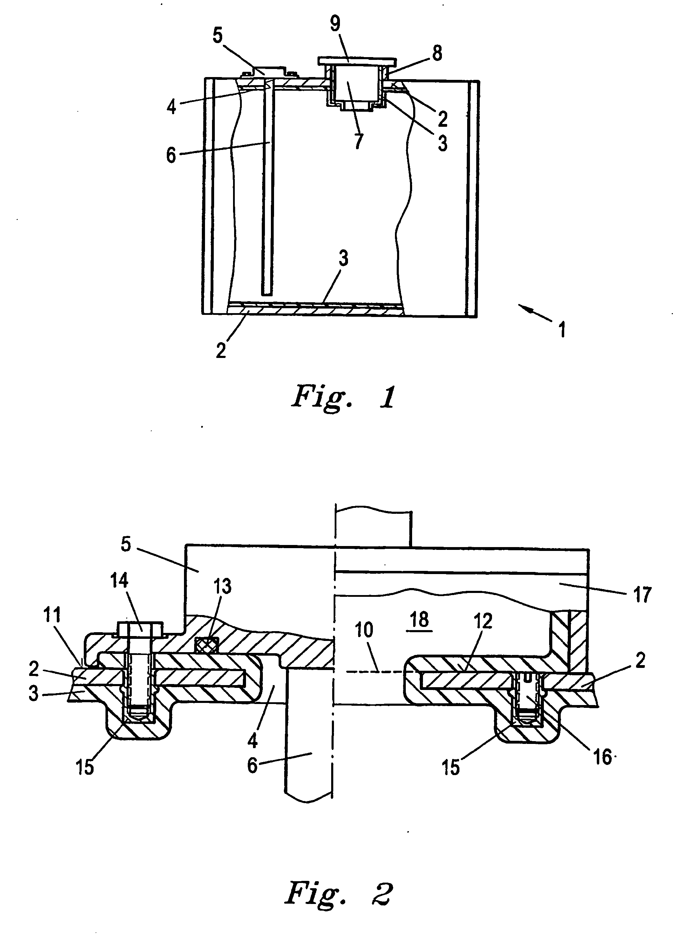

Fig. 1 zeigt einen Tank 1, der zur Aufnahme aggressiver Betriebsmittel von Kraftfahrzeugen bestimmt ist, beispielsweise einer Katalysator-Harnstofflösung. Der Tank 1 kann beliebige Einbauten wie Trennwände, Schwallwände usw. (nicht gezeigt) enthalten oder auch selbst nur eine Kammer eines Mehrkammertanks sein, dessen andere Kammern beispielsweise für Kraftstoff bestimmt sind, usw.

Der Tank 1 weist eine Wandung 2 aus Metall auf, bevorzugt aus Aluminium. Die Metallwandung 2 ist auf ihrer Innenseite mit einer Kunststoffbeschichtung 3 versehen, welche somit das gesamte Tankinnere auskleidet.

Die Kunststoffbeschichtung 3 ist resistent gegenüber dem aufzunehmenden Betriebsmittel, hier Harnstofflösung. Geeignete Kunststoffe für die Kunststoffbeschichtung sind beispielsweise Polyolefine wie HDPE (high density polyethylene), MDPE (middle density polyethylene), LDPE (low density polyethelene) oder LLDPE (linear low density polyethylene).

Die Kunststoffbeschichtung 3 wird "in-situ" in der Metallwandung 2 durch das in der Technik bekannte Rotolining-Verfahren gefertigt. Dazu wird Kunststoffmaterial in z.B. granularer Form über eine Öffnung in den Tank eingebracht, dann wird die Öffnung verschlossen und der Tank erhitzt und gedreht, bis das Granulat als Kunststoffbeschichtung auf der Innenseite der Metallwandung 2 aufschmilzt.

Wie in Fig. 1 vorerst schematisch gezeigt, besitzt der Tank 1 eine erste Öffnung 4 für einen in den Tank 1 hineinreichenden und mit einem Endflansch 5 versehenen Bauteil 6, beispielsweise eine Saugleitung mit Füllstandsensor und Heizung, sowie eine zweite Öffnung 7 für einen Einfüllstutzen 8 zur Verankerung eines Tankdeckels 9. Die Umfangsform der Öffnungen 4, 7 ist beliebig, beispielsweise polygonal, gekrümmt oder bevorzugt kreisförmig.

Die Konstruktion im Bereich der Öffnung 4 ist in der linken Hälfte von Fig. 2 im Detail gezeigt. Die Kunststoffbeschichtung 3 ist durch die Öffnung 4 hindurch, über das Niveau 10 der Außenseite 11 der Metallwandung 2 hinaus und auf den um die Öffnung 4 herum liegenden Bereich 12 der Außenseite 11 geführt. Der Endflansch 5 des Bauteils 6 übergreift die Kunststoffbeschichtung 3 auf dem Bereich 12 in dichter Anlage.

Zur zusätzlichen Abdichtung ist der Endflansch 5 mit einer Ringdichtung 13 versehen, welche gegen die herausgeführte Kunststoffbeschichtung 3 abdichtet. Schrauben 14 durchsetzen die Kunststoffbeschichtung 3 im Bereich 12 und greifen in Einpreßmuttern 15 ein, welche in die Metallwandung 2 eingepreßt sind, um den Endflansch 5 zu fixieren.

In einer vereinfachten Ausführungsform (nicht dargestellt) könnte sich die Kunststoffbeschichtung 3 auch nur bis zum Niveau 10 der Außenseite 11 der Metallwandung 2 erstrecken, und der Endflansch 5 des Bauteils 6 liegt direkt auf dem (dann unbeschichteten) Bereich 12 in dichter Anlage auf.

Die rechte Hälfte von Fig. 2 zeigt einen Zwischenschnitt bei der Fertigung der Kunststoffbeschichtung 3 durch Rotolining. Zunächst werden in die Einpreßmuttern 15 Stopfen 16 eingesetzt, um das Eindringen von Kunststoffmaterial während des Rotolinings zu verhindern. Anschließend wird mit Hilfe einer auf die Außenseite der Metallwandung 2 aufgesetzten Formglocke 17 ein Hohlraum 18 außerhalb der Öffnung 4 geschaffen, welcher den genannten Bereich 12 umfaßt, um den Bereich 12 während des Rotolinings mitzubeschichten. Nach Entfernen der Formglocke 17 wird die Kunststoffbeschichtung 3 auf den Außenbereich 12 zugeschnitten und die Stopfen 16 werden freigelegt und entfernt. Wenn über die Außenseite 11 vorstehende Stopfen 16 verwendet werden (nicht gezeigt), brauchen diese nicht gesondert freigelegt, sondern lediglich herausgedreht zu werden.

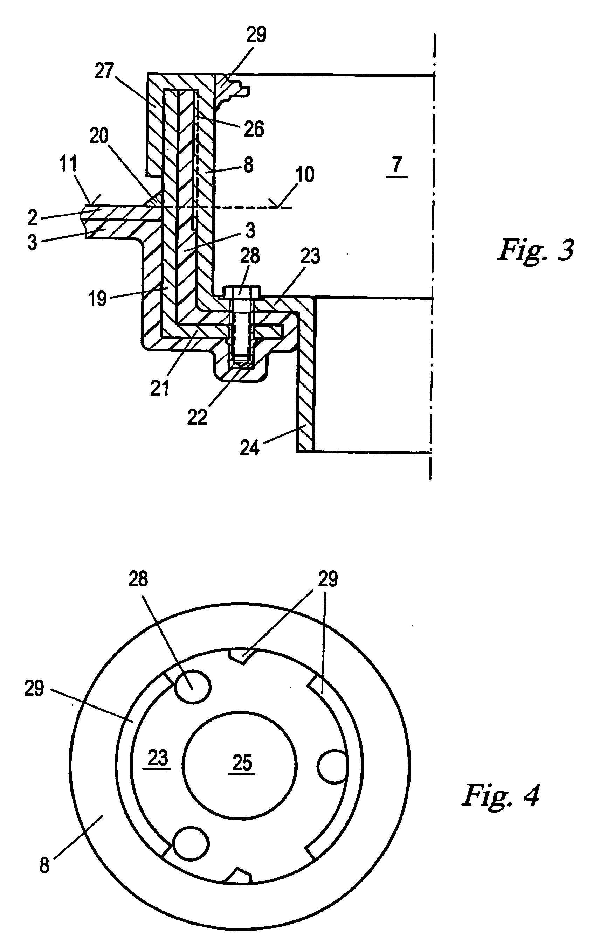

Fig. 3 zeigt eine alternative Konstruktion des Herausführens der Kunststoffbeschichtung 3 aus dem Tankinneren, und zwar insbesondere zur Montage eines Einfüllstutzens 8 in der Öffnung 7.

In die Öffnung 7 der Metallwandung 2 wird zunächst eine über die Außenseite 11 der Metallwandung 2 vorstehende Tülle bzw. Hülse 19 aus Kunststoff oder bevorzugt Metall eingesetzt und verschweißt, wie durch die Schweißnaht 20 angedeutet. Die Hülse 19 besitzt an ihrem unteren Ende einen Innenabsatz 21, sodaß sie etwa die Form eines mit einer Bodenöffnung versehenen Topfes hat. In den Innenabsatz 21 sind Einpreßmuttern 22 zur späteren Verankerung des Einfüllstutzens 8 eingepreßt.

Während des Rotolining-Schrittes werden der in das Tankinnere vorstehende Teil der Hülse 19 und die Innenseite der Hülse 19 mitbeschichtet, sodaß die Kunststoffbeschichtung 3 durch die Öffnung 7 hindurch, über das Niveau 10 der Außenseite 11 der Metallwandung 2 hinaus und auf der Innenseite der Hülse 19 verläuft. Dabei können wieder temporäre Stopfen 16 zum Schutz der Einpreßmutter 22 während des Rotolinings verwendet werden.

Der Einfüllstutzen 8 hat einen zum Innenabsatz 21 der Hülse 19 komplementären Innenabsatz 23 mit daran anschließendem Innenstutzen 24 und wird in die Kunststoffbeschichtung 3 auf der Innenseite der Hülse 19 eingepreßt. Die Preßverankerung kann durch ein Außengewinde 26 auf der Außenseite des Einfüllstutzens 8 erhöht werden, in welchem Fall der Einfüllstutzen 8 eingeschraubt wird.

Das äußere Ende des Einfüllstutzens 8 ist zu einem umgebogenen Rand 27 ausgebildet, der das äußere Ende der Hülse 19 und ihre innere Kunststoffbeschichtung 3 umgreift. Der Einfüllstutzen 8 wird mit Schrauben 28, die den Innenabsatz 23 und die Kunststoffbeschichtung 3 der Hülse 19 durchsetzen und in die Einpreßmuttern 22 eingreifen, am Innenabsatz 21 der Hülse 19 fixiert.

Der Einfüllstutzen 8 kann ferner mit Laschen 29 zur Bajonettverankerung des Tankdeckels 9 ausgestattet sein. Der Einfüllstutzen 8 wird bevorzugt aus harnstoffresistentem Kunststoff gefertigt.

Die Erfindung ist nicht auf die dargestellten Ausführungsbeispiele beschränkt, sondern umfaßt alle Varianten und Modifikationen, insbesondere auch beliebige Kombinationen der gezeigten Ausführungsbeispiele, die in den Rahmen der angeschlossenen Ansprüche fallen.

## Patentansprüche

1. Tank (1) für Betriebsmittel von Kraftfahrzeugen, mit einer Metallwandung (2), zumindest einer darin ausgebildeten Öffnung (4, 7) mit einer gegenüber dem Tankinneren verringerten lichten Weite, sowie einer Kunststoffbeschichtung (3) auf der Innenseite der Metallwandung (2), **dadurch gekennzeichnet, daß** sich die Kunststoffbeschichtung (3) durch die Öffnung (4, 7) hindurch über das Niveau (10) der Außenseite (11) der Metallwandung (2) hinaus erstreckt, indem sie U-förmig um die Kante des Rands der Öffnung (4) nach außen geführt ist und auf dem um die Öffnung (4) liegenden Bereich (12) der Außenseite (11) der Metallwandung (2) aufliegt, wobei der Tank (1) einen in den Tank (1) reichenden und mit einem Endflansch (5) versehenen Bauteil (6), bevorzugt einen Meßwertgeber, aufweist, der in der Öffnung (4) aufgenommen ist und dessen Endflansch (5) die Kunststoffbeschichtung (3) auf dem genannten Bereich (12) der Außenseite (11) in dichter Anlage übergreift.

2. Tank nach Anspruch 1, **dadurch gekennzeichnet, daß** der Endflansch (5) eine Dichtung (13) zur Anlage an der Kunststoffbeschichtung (3) im genannten Bereich (12) aufweist.

3. Tank (1) für Betriebsmittel von Kraftfahrzeugen, mit einer Metallwandung (2), zumindest einer darin ausgebildeten Öffnung (4, 7) mit einer gegenüber dem Tankinneren verringerten lichten Weite, sowie einer Kunststoffbeschichtung (3) auf der Innenseite der Metallwandung (2), **dadurch gekennzeichnet, daß** sich die Kunststoffbeschichtung (3) durch die Öffnung (4, 7) hindurch über das Niveau (10) der Außenseite (11) der Metallwandung (2) hinaus erstreckt, indem der Tank (1) eine über die Außenseite (11) der Metallwandung (2) vorstehende Hülse (19) aufweist, welche in der Öffnung (7) aufgenommen ist und an deren Innenseite die Kunststoffbeschichtung (3) anliegt.

4. Tank nach Anspruch 3, **dadurch gekennzeichnet, daß** er einen Einfüllstutzen (8) aufweist, welcher von der Hülse (19) aufgenommen und in die Kunststoffbeschichtung (3) auf der Innenseite der Hülse (19) eingepreßt ist.

5. Tank nach Anspruch 4, **dadurch gekennzeichnet, daß** der Einfüllstutzen (8) mit einem Außengewinde (26) und/oder mit Außenrippen zur Preßverankerung in der Kunststoffbeschichtung (3) versehen ist.

6. Tank nach Anspruch 4 oder 5, **dadurch gekennzeichnet, daß** der Einfüllstutzen (8) an seinem äußeren Ende einen umgebogenen Rand (27) besitzt, welcher das äußere Ende der Hülse (19) mit ihrer Kunststoffbeschichtung (3) umgreift

7. Tank nach einem der Ansprüche 4 bis 6, **dadurch gekennzeichnet, daß** die Hülse (19) und der Einfüllstutzen (8) zueinander komplementäre Innenabsätze (21, 23) aufweisen und der Innenabsatz (23) des Einfüllstutzens (8) mittels die Kunststoffbeschichtung (3) durchsetzender Befestigungsmittel (28) am Innenabsatz (21) der Hülse (19) festgelegt ist.

8. Tank nach einem der Ansprüche 1 bis 7, **dadurch gekennzeichnet, daß** die Metallwandung (2) und die Hülse (19), soferne eine solche vorhanden ist, aus Aluminium gefertigt sind.

9. Tank nach einem der Ansprüche 1 bis 8, **dadurch gekennzeichnet, daß** die Kunststoffbeschichtung (3) durch Rotolining in-situ in der Metallwandung (2) geformt ist.

10. Tank nach einem der Ansprüche 1 bis 9, **dadurch gekennzeichnet, daß** die Kunststoffbeschichtung (3) resistent gegenüber Harnstofflösungen ist.

## Claims

1. A tank (1) for operating material of motor vehicles comprising a metal wall (2), at least one opening (4, 7) formed therein with a reduced clearance compared to the inside of the tank, as well as a plastic coating (3) on the inner surface of the metal wall (2), **characterized in that** the plastic coating (3) extends through the opening (4, 7) beyond the level (10) of the outside (11) of the metal wall (2) by being guided to the outside in a u-shape around the edge of the boundary of the opening (4) and by resting on the region (12) of the outside (11) of the metal wall (2) which surrounds the opening (4), with the tank (1) including a component (6), which preferably is a sensor and which extends into the tank (1) and is provided with a end flange (5), which sensor is accommodated in the opening (4) with its end flange (5) being closely attached to and overlapping the plastic coating (3) in the said region (12) of the outside (11).

2. The tank according to claim 1, **characterized in that** the end flange (5) includes a gasket (13) to abut on the plastic coating (3) in the said region (12).

3. A tank (1) for operating material of motor vehicles comprising a metal wall (2), at least one opening (4, 7) formed therein with a reduced clearance compared to the inside of the tank, as well as a plastic coating (3) on the inner surface of the metal wall (2), **characterized in that** the plastic coating (3) extends through the opening (4, 7) beyond the level (10) of the outside (11) of the metal wall (2) by the tank (1) including a bush (19) which protrudes the outside (11) of the metal wall (2), which bush is accommodated in the opening (7) and at the inside of which the plastic coating (3) is attached.

4. The tank according to claim 3, **characterized in that** the tank includes a tank inlet (8) which is accommodated in the bush (19) and is press-fitted into the plastic coating (3) on the inside of the bush (19).

5. The tank according to claim 4, **characterized in that** the tank inlet (8) is provided with a male thread (26) and/or with external ribs for press-fitting into the plastic coating (3).

6. The tank according to claim 4 or 5, **characterized in that** the tank inlet (8) has a bent rim (27) at its outer end, which rim encompasses the outer end of the bush (19) with its plastic coating (3).

7. The tank according to one of the claims 4 to 6, **characterized in that** the bush (19) and the tank inlet (8) include internal offsets (21, 23) which are complementary to each other and that the internal offset (23) of the tank inlet (8) is fixed at the internal offset (21) of the bush (19) by means of fasteners (28) permeating the plastic coating (3).

8. The tank according to one of the claims 1 to 7, **characterized in that** the metal wall (2) and the bush (19), if there is one, are made of aluminum.

9. The tank according to one of the claims 1 to 8, **characterized in that** the plastic coating (3) is formed in the metal wall (2) by rotolining in situ.

10. The tank according to one of the claims 1 to 9, **characterized in that** the plastic coating (3) is resistant to urea solutions.

## Revendications

1. Réservoir (1) pour moyens de service de véhicules automobiles, comprenant une paroi métallique (2), au moins une ouverture (4, 7) ménagée dans celle-ci et présentant une largeur libre réduite par rapport à l'intérieur du réservoir, ainsi qu'un revêtement de matière plastique (3) sur le côté intérieur de la paroi métallique (2), **caractérisé en ce que** le revêtement de matière plastique (3) s'étend en traversant l'ouverture (4, 7) jusqu'au-delà du niveau (10) de la face extérieure (11) de la paroi métallique (2), en étant guidé en forme de U vers l'extérieur autour de l'arête du bord de l'ouverture (4), et repose sur la zone (12), située autour de l'ouverture (4), de la face extérieure (11) de la paroi métallique (2), le réservoir (1) comprenant un composant (6) pénétrant dans le réservoir (1) et pourvu d'une bride terminale (5), de préférence un capteur de valeur de mesure, qui est reçu dans l'ouverture (4) et dont la bride terminale (5) coiffe en contact intime le revêtement de matière plastique (3) sur la zone précitée (12) de la face extérieure (11).

2. Réservoir selon la revendication 1, **caractérisé en ce que** la bride terminale (5) comprend un joint (13) pour venir en contact sur le revêtement de matière plastique (3) dans la zone précitée (12).

3. Réservoir (1) pour moyens de service de véhicules automobiles, comprenant une paroi métallique (2), au moins une ouverture (4, 7) ménagée dans celle-ci et présentant une largeur libre réduite par rapport à l'intérieur du réservoir, ainsi qu'un revêtement de matière plastique (3) sur le côté intérieur de la paroi métallique (2), **caractérisé en ce que** le revêtement de matière plastique (3) s'étend en traversant l'ouverture (4, 7) jusqu'au-delà du niveau (10) de la face extérieure (11) de la paroi métallique (2), du fait que le réservoir (1) comprend une douille (19) qui dépasse au-delà de la face extérieure (11) de la paroi métallique (2), qui est reçue dans l'ouverture (7) et telle que le revêtement de matière plastique (3) est appliqué contre sa face intérieure.

4. Réservoir selon la revendication 3, **caractérisé en ce qu'**il comprend une pipe de remplissage (8) qui est reçue par la douille (19) et qui est enfoncée à la presse dans le revêtement de matière plastique (3) sur la face intérieure de la douille (19).

5. Réservoir selon la revendication 4, **caractérisé en ce que** la pipe de remplissage (8) est pourvue d'un pas de vis extérieur (26) et/ou de nervures extérieures pour l'ancrage à la presse dans le revêtement de matière plastique (3).

6. Réservoir selon la revendication 4 ou 5, **caractérisé en ce que** la pipe de remplissage (8) possède à son extrémité extérieure une bordure recourbée (27) qui entoure l'extrémité extérieure de la douille (19) avec son revêtement de matière plastique (3).

7. Réservoir selon l'une des revendications 4 à 6, **caractérisé en ce que** la douille (19) et la pipe de remplissage (8) comprennent des talons intérieurs (21, 23) complémentaires l'un de l'autre, et le talon intérieur (23) de la pipe de remplissage (8) est immobilisé sur le talon intérieur (21) de la douille (19) au moyen d'organes de fixation (28) traversant le revêtement de matière plastique (3).

8. Réservoir selon l'une des revendications 1 à 7, **caractérisé en ce que** la paroi métallique (2) et la douille (19), dans la mesure où celle-ci est prévue, sont fabriquées en aluminium.

9. Réservoir selon l'une des revendications 1 à 8, **caractérisé en ce que** le revêtement de matière plastique (3) est mis en forme in situ dans la paroi métallique (2) par "rotolining" (doublage par rotation).

10. Réservoir selon l'une des revendications 1 à 9, **caractérisé en ce que** le revêtement de matière plastique (3) est résistant par rapport aux solutions d'urée.
